(19) **Europäisches Patentamt / European Patent Office / Office européen des brevets**

(11) **EP 3 034 300 B1**

(12) **EUROPEAN PATENT SPECIFICATION**

(45) Date of publication and mention
of the grant of the patent:
**22.08.2018   Bulletin 2018/34**

(51) Int Cl.:
**B32B 27/08** (2006.01)      **B32B 27/32** (2006.01)

(21) Application number: **15197465.6**

(22) Date of filing: **02.12.2015**

(54) **MULTILAYER FILMS**

MEHRSCHICHTIGE FOLIEN

FILMS MULTICOUCHES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2014   IT MI20142184**

(43) Date of publication of application:
**22.06.2016   Bulletin 2016/25**

(73) Proprietor: **Irplast S.p.A.**
**50053 Empoli (FI) (IT)**

(72) Inventors:
• **DI COSTANZO, Carmelo**
  **66034 Lanciano, Chieti (IT)**

• **PASQUINI, Gino**
  **66030 Treglio, Chieti (IT)**
• **QUADRINI, Ombretta**
  **66040 Altino, Chieti (IT)**
• **SANTILLI, Fausto**
  **65028 Tocco Da Casauria Pescara (IT)**
• **DE IULIIS, Davide**
  **66034 Lanciano, Chieti (IT)**

(74) Representative: **Rossetti, Elena**
**BUGNION S.p.A.**
**Via di Corticella 87**
**40128 Bologna (IT)**

(56) References cited:
**EP-A1- 1 736 309      EP-A1- 2 447 058**
**EP-A1- 2 520 428**

**Description**

The present invention relates to multilayer films for naked collation of packed products to form packages of 6 or more packs, which can be collected without using cutting tools, such as knives, scissors, etc., wherein the film of the package does not substantially scratch when the package is handled on conveyor belts made of rigid materials, as those commonly used in this area.

More specifically the present invention relates to multilayer films, preferably heat shrinkable, for naked collation of cigarette packs to form packages of 6-10 or more packs arranged one close to the other, having a sealing temperature comprised between 65°C and 79°C, preferably 65°C-78°C, more preferably 70-76°C between the outer layer/outer layer (B/B), outer layer/inner layer (B/A), inner layer/inner layer (A/A) and between inner layer/outer layer (A/B) of the multilayer film, wherein at the same time the risk of sealing between the inner layer (A) of the multilayer film and the film wrapping the single packets of the package is substantially reduced.

It is well known in the art that naked collation has the purpose to wrap and keep together more packs or packets, generally cigarette packets, assembled in groups of 6, 10 or more units.

Wrapping of the packs is carried out by using a multilayer film that shows the advantage of eliminating paper boxes or cardboard boxes used in the prior art. The industrial advantages of naked collation are evident considering that the use of paper or cardboard boxes requires a separate manufacturing process. Additionally the cardboard boxes, after filling, must be wrapped in a film to avoid a damage of the paper or the cardboard during transportation that can happen, for instance, by rubbing or friction of the packages with foreign objects. Therefore the naked collation system allows to avoid one step in the packaging process of cigarette packs. The essential feature of a naked collation film is its sealing to itself. The inner and the outer surfaces of the multilayer film must seal according to anyone of the following ways: outer/outer, inner/inner, inner/outer, outer/inner; but the naked collation film must not seal to the film used for wrapping the single cigarette packets. This feature is required in order to avoid that during collection of the naked collation film from the package also the film of the single cigarette packs is broken or damaged. From a commercial point of view any breakage or damage of the film wrapping the single cigarette pack makes the latter no longer acceptable for the market and the pack is thus considered a scrap.

Furthermore the multilayer film must possess good mechanical properties, especially in the longitudinal direction (MD) to allow packaging on high speed manufacturing (packaging) lines without tearing and to maintain the cut length for the naked collation application.

It is also well known that when the naked collated packages of cigarette packs have been delivered to the points of sale, the collation film is removed to collect and expose the single cigarette packets.

The use of multilayer films having an acrylic coating for packaging is known. These films have several drawbacks:

- high cost, as after the film manufacture the acrylic resin must be spread on the film;
- environmental problems for the recycle and disposal of the acrylic resins;
- after a few hours of running of the manufacturing line, during pack wrapping to form the package a release of a white dust of acrylic resin on the machine rolls takes place. This brings to a downtime of the process in order to clean the machine and prevent dust from being dispersed into the environment, as it represents a health hazard for the personnel. Further, also the dust deposits on the single packs must be avoided. However the most remarkable drawback of these naked collation films is the use of cutting tools, for example knives or scissors, for collecting the packs from the package. As this operation has caused considerable inconveniences to the users, above all from the safety point of view, it was more and more felt the need to have available films for naked collation that could be removed from cigarette packets without using cutting tools.

Besides this, the most demanding manufacturers require naked collation films showing good antiscratch properties also when the naked collated package is handled on rigid surfaces.

Multilayer films having antiscratch properties are known in the prior art.

See for example USP 4,502,263 wherein this property is obtained by using a heat sealable layer formed of (% by weight):

(a) from 68.5 to 89.7% of a terpolymer E/P/B (ethylene/propylene/butylene) and a copolymer P/B, wherein in the polymer mixture (% by weight) E is between 0.1 and 7%, P between 53 and 89.9% and B between 10 and 40%;
(b) from 5 to 15% of a low molecular weight hydrocarbon resin;
(c) from 5 to 15% of polypropylene homopolymer;
(d) from 0.3 to 1.5% of silicone (polydiorganosiloxane).

From USP 4,734,318 it is furthermore known a film having improved antiscratch properties comprising a polypropylene core layer coated on both surfaces with an intermediate polypropylene layer containing as additives (% by weight) from 0,1 to 1% of a pigment and from 0,2 to 1% of an oxyalkylamine. The outer layers (top layers) have the same composition as the heat sealable layer described in the above mentioned US patent.

USP 4,883,698 discloses metallizable multilayer films wherein hydrogenated resins based on olefin polymers together with inorganic pigments and poly-di-organosiloxanes are used in the heat sealable layers in order to confer antiscratch properties. The components allowing to confer antiscratch properties are those known from the above described patents.

USP 5,302,427 claims multilayer films wherein the polypropylene of the core layer has been degraded with peroxides and the heat sealable layer comprises a polymer mixture as that described for component (a) of the heat sealable layer of the film of USP 4,502,263, together with a polydiorganosiloxane and silica particles.

It is furthermore known from patent application EP 2,520,428 in the name of the Applicant a multilayer film for naked collation formed of a core of polypropylene homopolymer and of heat sealable layers formed of a P/B polymer with a melting temperature in the range from 65°C to 105°C. The drawback of this film for naked collation overwrap is that when handling the naked collated package on rigid surfaces scratch-resistance is not satisfactory. In fact it has been noted that scratches on the film surface are formed during package handling, in particular when it comes into contact with supports or rigid surfaces, for example the conveyor belts commonly used for this purpose.

The need was felt to have available multilayer films for naked collation of single products to form a package having the following combination of properties:

- sealing temperature comprised between 65°C and 79°C;
- antiscratch properties in order to handle the package on rigid surfaces as defined later on, whereas the films do not get scratched during packaging of groups of packed products and/or during transportation of the package on supports or rigid surfaces;
- the films being easily removable from the package without using cutting tools, in order to carry out safely package opening;
- the films wound in roll being suitable for producing naked collated packages on high speed manufacturing lines, the line speed being of the order of 70-100 packages/minute, without showing adhesion both to the rolls of the manufacturing line and to the film of the single packed products (for example single cigarette packets), the scrap percentage of the process being lower than 1%, preferably lower than 0.1%, more preferably lower than 0.01%, the scraps calculated as reported afterwards;
- in particular, on the manufacturing line the scrap percentage due to scratches substantially tending to or being zero.

Multilayer films allowing to solve this technical problem and having the combination of the above desired properties have been surprisingly and unexpectedly found by the Applicant.

An object of the present invention are multilayer films for naked collation of packed products to form packages of 6 or more packed units comprising at least a core layer, an inner layer and an outer layer consisting of one or more olefin (co)polymers wherein:

- outer layer (B): (co)polymers having a melting temperature in the range 65°C-85°C;
- inner layer (A): (co)polymers having a melting temperature in the range 65°C-105°C;
- core layer: propylene and/or butene (co)polymers having melting temperature higher than 140°C;

wherein the film wrapping the single packed units or products comprises one or more olefin (co)polymers having melting temperature higher than 120°C;
the inner layer (A) of the multilayer films being in contact with the film (film 0) wrapping the single products (packed units) forming the package;
wherein the outer layer (B) of the film wrapping the package has a thickness comprised between 0.35 and <0.5 $\mu$m.

The film of the invention shows antiscratch properties. It has been found that the outer layer (B) of the multilayer film is not scratched either during the package formation or during the transportation and handling the package when it comes into contact with rigid supports, etc.

By rigid surfaces and rigid supports it is meant a surface or support made of metals, or also some types of stiff plastics such as Teflon.

Preferably the (co)polymers of the outer layer (B) have a melting temperature in the range from 65°C to 78°C, more preferably from 70°C to 78°C.

Preferably the (co)polymers of the inner layer (A) have melting temperatures comprised between 70°C and 90°C, still more preferably between 70°C and 80°C.

Preferably the (co)polymers of propylene and/or butene of the core layer have melting temperatures higher than 160°C.

Preferably the melting temperature of the olefin (co)polymers which the film wrapping the single packed products is made of, is comprised between >120°C-170°C, more preferably 125°C-165°C.

Preferably the thickness of the outer layer (B) of the film of the present invention is comprised between 0.4 and 0.45 μm.

Preferably the multilayer films of the invention are heat shrinkable, biaxially or uniaxially oriented, preferably heat shrinkable biaxially oriented.

Heat shrinkage is determined by the heat shrink test OPMATC4 (Oriented Polypropylene Manufacturers' Association) at 130°C for 5 minutes in the air. Generally the heat shrinkage value in MD and TD for a biaxially oriented film, or in MD for an uniaxially oriented film, is in the range from 5 to 70%, preferably from 8 to 40%, more preferably 8-15%, still more preferably 9-13%.

In order to obtain a biaxial heat shrinkage the profiles of the longitudinal (MD) and transversal (TD) stretching ratios must be modified at the same time.

By profile of the stretching ratio it is meant the curve obtained by plotting in a Cartesian coordinate system, respectively:

for the longitudinal stretching, in ordinates the stretching ratio (film speed at the selected point of the stretching frame (oven)/film speed at the inlet of the stretching frame) and in abscissas the distance between the inlet into the stretching frame and the selected point of the stretching frame;

for the transversal stretching, in ordinates the stretching ratio (distance between the stretching rails at the selected point of the film in the stretching frame) / (distance between the rails at the inlet of the stretching frame) and in abscissas the distance as above defined for the profile of the longitudinal stretching ratio.

The profile of the longitudinal (MD) stretching ratio is an ascending curve (positive slope) or it shows a maximum peak wherein the projection on the ordinates axis of the Cartesian ordinate system of its descending side (the one with a negative slope) is no more than 20% with respect to the peak height determined on the ordinate axis.

The profile of the transversal (TD) stretching ratio is the same as above described for the profile of longitudinal stretching ratio in the case of a film that shrinks both in MD and in TD.

The naked collation film of the present invention is preferably obtained by simultaneous stretching the film in MD and in TD, by operating at temperatures comprised between 155°C and 165°C while maintaining a constant stretching ratio both in MD and in TD, then cooling at temperatures comprised between 145°C and 125°C and decreasing the stretching ratio both in MD and in TD of a percentage preferably <15% with respect to the maximum value achieved in each direction. In order to obtain a film showing an uniaxial heat shrink in MD the transversal stretching ratio profile is modified in order to increase the relaxation in TD. This is achieved by using a transversal stretching ratio profile showing a maximum peak, wherein the projection of its descending side (the one with a negative slope) on the ordinate axis with respect to the height peak value (determined on the same axis) ranges from 15 to 30%, preferably it is equal to about 25%.

By operating in this way the film heat shrink values in TD are very reduced, lower than 5%, preferably lower than 4%. The profile of the stretching ratio in MD of the uniaxial heat shrink film is the same as that reported above for the simultaneous stretching in MD and TD.

After the stretching step the film is wound in rolls (extrusion mother roll) having very high lengths, even up to 20,000 meters. By cutting these rolls, rolls called "extrusion daughter rolls" preferably having a diameter up to 1,000 mm, are obtained. From the latter the rolls for naked collation application are at the end obtained.

Preferably the packed units or packed products are cigarette packets arranged the one close to the other. A common example is represented by the packages in commerce for groups of 6 or more cigarette packets.

The (co)polymers forming the outer layer (B) and the inner layer (A) are equal to or different from each other in the two layers. These layers can be formed of one or more (co)polymers with the proviso that the melting temperature of the mixture of (co)polymers forming the layer is within the limits indicated above respectively for the outer layer (B) and for the inner layer (A).

The (co)polymers that can be used for the inner layer (A) and outer layer (B) of the multilayer film are generally ethylene copolymers comprising one or more linear or branched alpha-olefin comonomers from 3 to 12, preferably from 3 to 8 carbon atoms. As an example of such monomers propylene, butene, in particular butene-1, hexene, octene, decene and dodecene can for instance be mentioned. The corresponding amount as percent by weight on the polymer of butene, hexene, octene, decene and dodecene is generally not higher than 50%, preferably ranging from 15% to 35%, more preferably from 20% to 30%.

Other preferred copolymers that can be used are propylene-based copolymers, comprising one or more alpha-olefin comonomers, linear or branched, having from 4 to 12, preferably from 4 to 8 carbon atoms, and optionally ethylene. As olefin comonomers ethylene, butene, preferably butene-1, hexene, octene, decene and dodecene can for example be mentioned. The amount of butene, hexene, octene, decene and dodecene, as % by weight on the copolymer, is generally not higher than 40%, preferably from 10% to 30%, more preferably from 20% to 28%. The ethylene amount (% by weight) is in the range 0-20%, preferably 0-15%, more preferably 0-5%.

Together with the above indicated monomers, monomers containing more than one ethylenic unsaturation can also be used in ethylene based and propylene-based copolymers. As monomers containing more than one unsaturation linear, conjugated or non conjugated dienes, from 4 to 20 carbon atoms; cyclic compounds having a ring of 5 or 6 carbon atoms, preferably vinylcycloalkenes, as for example vinylcyclohexene; aromatic compounds, such as cyclopentadiene; vinylaromatic compounds such as styrene, 2,4 vinylstyrene, optionally one or more hydrogen atoms of the ring being substituted with saturated alkyl groups from 1 to 12 carbon atoms or unsaturated alkyl groups from 2 to 12 carbon atoms, can be mentioned. Optionally one or more carbon atoms of the ring can be substituted by heteroatoms, selected preferably from nitrogen, oxygen, sulphur.

As monomers containing more than one unsaturation, conjugated dienes, for example butadiene, isoprene, piperylene, 1,3-hexadiene, 1,3-octadiene, 2,4-decadiene, cyclopentadiene; non conjugated dienes such as 1,4-hexadiene, 7-methyl-1,6-octadiene; cyclic non conjugated dienes as norbornene, ethylidennorbornene, 4-vinylcyclohexene and vinylaromatic monomers such as styrene, 2,4-vinylstyrene etc., can be mentioned.

The amount of dienes in % by weight with respect to the copolymer is in the range from 0 to 25%, preferably from 0.1 to 10%, more preferably 0.1-3%.

Preferred examples of copolymers based on propylene are propylene/butene-1. These copolymers are amorphous and have an isotacticity index (II) preferably comprised between about 30% and 77%. The corresponding crystalline part has a melting point within the above mentioned limits.

The extractables of the copolymers of the inner and outer layers are preferably in an amount comprised between >60%-70% and it is determined at 50°C for 2 hours according to FDA 177 - 1520 Standard.

The (co)polymers of the inner layer (A) of the multilayer film are different from the (co)polymers of film (O). For example if (A) comprises a propylene (co)polymer, film (0) contains an ethylene or butene (co)polymer, or film (0) can contain a propylene copolymer and at least a comonomer different from propylene, selected for example between ethylene and/or butene. If (A) contains an ethylene (co)polymer, film (0) contains a propylene or butene (co)polymer or it can contain an ethylene copolymer with a comonomer different from ethylene.

The (co)polymers of the core layer are preferably selected from propylene homopolymers and/or from butene homopolymers, preferably propylene homopolymers.

Generally the propylene homopolymers show an amount of extractables in hexane, determined by the method indicated above, preferably lower than 10% by weight, more preferably lower than 3% by weight.

According to a preferred embodiment in addition to the abovesaid (co)polymers, the core contains also amorphous hydrocarbon resins. The amorphous hydrocarbon resins show a softening point in the range from about 130°C to about 180°C, preferably from about 130°C to 160°C, determined according to ASTM E28. Preferably the hydrocarbon resins are low molecular weight synthetic resins and preferably have an average number molecular weight between 200 and 1000. Such hydrocarbon resins are preferably formed of compounds such as styrene, methylstyrene, vinyltoluene, indene, pentadiene, cyclopentadiene and the like. Hydrogenated resins, in particular cyclopentadiene hydrogenated resins are preferred. The Saybold color number according to ASTM D 158 of these hydrocarbon resins is preferably higher than about 20, more preferably higher than about 25.

Hydrogenated resins are preferably used in the form of masterbatches containing from 50% to 70% of the resin, the remaining part being a propylene homopolymer or a propylene copolymer. Generally the amount of the masterbatch is between 10%-20% by weight with respect to the core polymer (5%-14% by weight of resin based on the polymer). When the core contains an hydrocarbon resin, preferably the (co)polymer is polypropylene.

The olefin (co)polymers described above are obtained by polymerization with Ziegler Natta catalysts or by catalysis by metallocenes.

The polymerization for obtaining the (co)polymers can be carried out by operating with the suspension technique, in inert diluent, in emulsion or in gaseous phase, with temperatures generally in the range from 0°C to 150°C at a pressure generally in the range from 1 to 300 bar, optionally by using a molecular weight regulator, for example hydrogen.

Polymerization by means of metallocenes can take place by using catalysts comprising the reaction product from:

1) a bis-cyclopentadienyl derivative of general formula

$$(Cp_1Cp_2)\text{-}M\text{-}(L_2L_3)$$

containing oxygen groups bound to the transition metal wherein M is a metal selected from group IIIb to group Vb or of the lanthanide series of the periodic table of the elements; $Cp_1$ and $Cp_2$, equal to or different from each other, represent the following groups linked to M with delocalized $\pi$ bonds, in particular with an eta 5 bond when the groups are selected from cyclopentadiene, indene, fluorene or their derivatives substituted in the case of indene and fluorene also with the hydrogenated phenyl ring (rings), and with substituents both in the phenyl and in the cyclopentadienyl rings, also with heteroatoms; or with $\pi$ bonds as for example in the cyclooctatriene case; or said groups $Cp_1$ $Cp_2$ constrained with M through a bivalent linking bridge, for example of the -R- type wherein R is an alkylene preferably from 1 to 4 carbon atoms, -Si(R')$_2$- wherein R' is an alkyl from 1 to 10 C atoms, preferably from 1 to 6 carbon atoms; or an aryl optionally containing heteroatoms, such as O, N, or alkylaryl or arylalkyl from 7 to 20 carbon atoms; L$_2$ or L$_3$ equal to or different from each other represent a OR$_a$ group where R$_a$ is an aryl group, optionally the carbon atoms of the ring being substituted also with heteroatoms, and optionally containing substituents for example alkyl from 1 to 10 carbon atoms with

2) a cocatalyst selected from the compounds represented by following formulas:

2a) alumoxane, of general formula:

$$(R_b\text{-Al-O})_{m'}$$

under the form of a cyclic compound or as a linear polymeric compound having formula:

$$R_b(R_b\text{-Al-O})_m Al(R_b)_2;$$

in general alumoxane is a mixture of the two above indicated forms;

R$_b$ is an alkyl group from 1 to 5 C atoms, preferably selected from methyl,
m is an integer from 1 to 30, preferably from 4 to 20;
m' is an integer from 3 to 20, preferably from 4 to 20;

2b)

$$(L_1\text{-H})^+ (A)^-$$

wherein (A)$^-$ is a compatible not coordinating anion, it is preferably

$$(B\ Q_q)^-$$

wherein L$_1$ is a neutral Lewis base,

(L$_1$-H)$^+$ is a Bronsted acid,
B is an element of the group from IIIa up to VIa of the periodic table of the elements having metalloid characteristics, preferably boron, phosphorus or arsenic in the valence state 3 or 5, silicon, more preferably boron in the valence state 3;
Q, equal to or different from each other, are selected from the following groups: hydrides, halides, alkyls, aryls optionally substituted, for example with halogens, preferably F, alkoxides, aryloxides, dialkylamido, or R$_0$COO$^-$ wherein R$_0$ ranges from 1 to 20 carbon atoms, with the proviso that Q can be equal to halide only once;
q is an integer equal to the valence of B plus 1.

The preferred co-catalyst component 2) is 2b).
The alumoxane compound 2a) of the catalytic system is preferably prepared by reaction of aluminum triethyl and water, obtaining a mixture of linear and cyclic compounds. In general they are prepared by contacting a solution of aluminum trialkyl with water in suitable organic solvents, for example aliphatic hydrocarbons.
As known, aluminoxanes are compounds containing Al-O-Al bonds, with a molar ratio in the range O/Al, obtainable in the technique by reaction, under controlled conditions, of an alkyl aluminum, or alkyl aluminum halide, with water and, in the case of aluminum trimethyl, also with an hydrate salt, as hexahydrate aluminum sulphate, pentahydrate copper sulphate and pentahydrate iron sulphate.
The molar ratio between Al of the component 2a alumoxane and the amount of the metal of component 1 (metallocene) is in the range 10,000:1 - 100:1, preferably from 5,000:1 to 500:1. In the case of the boron compound (2b) the ratio ranges from (0.1-4):1 to preferably from (0.5-2.0) :1.
These catalysts are obtained for example by direct reaction of bis-cyclopentadienyl metal dialkyl, preferably dimethyl with the corresponding phenols. The reaction gives substantially quantitative yields. The corresponding phenol can be used in excess as it can also serve as a reaction solvent. Other solvents are for example cyclohexane, methylcyclohexane, hexane, diethylether, benzene, toluene, etc.
The thickness of the multilayer film is generally in the range 10-60 μm, preferably 12-40 μm, more preferably 18-30 μm.

The core layer has a thickness of 8-38 μm.

The thickness of the outer layer is within the limits indicated above, that of the inner layer is calculated by difference between the thickness of the film and that of the other layers.

The multilayer films of the invention are obtainable by extrusion and subsequent biaxial simultaneous stretching in MD machine direction and in TD transversal direction. In order to obtain good mechanical properties, in particular in MD, a biaxial stretching on flat die filming process is preferably used, preferably carried out by the Lisim® technology. This Lisim® technology uses a biaxial simultaneous stretching process, for example as described in USP 4,853,602 and subsequent patents describing this technology.

The biaxial stretching process comprises the following steps:

- coextrusion of a multilayer plate of the film having a thickness preferably comprised between about 1 and about 4 mm;
- plate quenching on a chilled roll, at a temperature preferably between 10 and 40°C;
- plate heating at a temperature comprised between about 100° and about 500°C, preferably by infrared rays;
- plate stretching by holding the edges of the plate, having an higher thickness than the plate, with a series of pliers or clamps independently driven by linear synchronous induction motors, each pliers or clamp sliding on a rail and being pulled by a permanent magnet or by a couple of permanent magnets, pushed by the magnetic wave created by the polar expansions of the linear motor; each section of the stretching frame having a series of linear synchronous induction motors arranged in a contiguous way, fed by alternate currents wherein phase and frequency are modulated so as to vary continuously the clamp (pliers) speed and thus the longitudinal stretching ratios of the film; the transversal stretching ratios being controlled by modifying the divergence of the rails on which the pliers or clamps slide.

Film stretching is carried out by means of a stretching frame comprising one or more sections inside an oven having temperatures comprised between about 80°C-210°C, preferably 120°C-190°C; in general the longitudinal stretching ratios being comprised between 3:1 and 10:1 and the transversal stretching ratios between 3:1 and 10:1.

The temperatures in each part of the above apparatus are selected so as to facilitate the biaxial orientation of the polymeric chains.

The longitudinal stretching ratio can be considered equal to the ratio between the speed of the film outletting the stretching frame (oven) and the speed of the film inletting the oven.

The transversal stretching ratio can be considered equal to the ratio between the film width at the outlet of the stretching frame and the film width at the inlet of the stretching frame.

The faculty given by the simultaneous stretching equipment of varying the MD stretching ratio in a wide range allows to obtain improved mechanical properties in the longitudinal (MD) direction. This makes it possible the use of the multilayer films on high speed manufacturing machines for naked collation, for example at a working speed of 1,000 single packs/minute corresponding to 100 packages/minute. In fact, notwithstanding the high speed, it is possible to maintain the cut length.

The multilayer film of the invention can also be formed of more than three layers, provided that the inner layer (A), the core layer and the outer layer (B) are as defined above. The multilayer film can have 5 or more layers, for example 7. The additional layers are equal to or different from the other layers of the multilayer film, the additional layers can be such as to confer to the multilayer film properties known in the art, for example antistatic, barrier, antifog, mechanical, flame retardant, optical, electrical properties.

The additional layers can be based on olefin (co)polymers or polymers such as for example EVA (ethyl-vinyl-lacetate polymer), EVOH (ethyl-vinylalcohol polymer), hydrocarbon resins, polyamides; if desired, compatibilizing polymers, etc. can also be used.

The multilayer film can also be subjected to the surface treatments known in the art, for example corona, flame treatment, etc. for obtaining an improved and more lasting printability and metallizability, while maintaining at the same time flexibility and mechanical properties, provided that the sealing temperature is within the above indicated limits.

The multilayer films of the present invention can also be printed, for example by using a primer, if requested, and subsequent deposition of an ink layer, and then printing by using flexography or rotogravure.

The sealing temperature among the outer/outer layer (B/B), inner/inner layer (A/A), outer/inner layer (B/A) and inner/outer layer (A/B) of the multilayer films of the invention is in the range 65°C-79°C, preferably 65°C-78°C, more preferably 70-76°C, the sealing being carried out according to the method described in the examples.

A further object of the present invention is the use of the multilayer films of the present invention for naked collation of packs, in particular to prepare packages wherein overwrapping naked collation film does not show scratches.

The Applicant has unexpectedly and surprisingly found that the films of the present invention, wound in rolls and then used for forming packages on high speed manufacturing lines, working for example at a speed comprised between 70-100 packages/minute, not only do not stick to the rolls of the manufacturing lines and to the film of the single packed units, but also they do not show scratches on the outer layer (B), the percentage of the scraps being lower than 1%, preferably lower than 0.1%, more preferably lower than 0.01%, the scraps due to the scratches tending to or being equal to zero, the scraps calculated as the percentage of non conforming (scrapped) packages (for example for a defective film sealing and/or the presence of scratches) with respect to those overall produced by the manufacturing line.

As said, this was a need felt on the market that the Applicant, after a long research surprisingly and unexpectedly was able to solve.

It has been unexpectedly and surprisingly found by the Applicant that by using the multilayer film of the invention a very good sealing is obtained at the indicated low temperatures between the outer layer/outer layer (B/B), the outer layer/inner layer (B/A), the inner layer/outer layer (A/B) and also between the inner layer/inner layer (A/A) while reducing at the same time the risk of sealing between the inner layer (A) of the multilayer film and the film (0) wrapping the single packet units and additionally substantially zeroing the presence of scratches on the outer layer (B) of the film wrapping the package.

These features were highly desired by the market because they provide the full functionality of the package.

As said, the film of the present invention can be easily and safely removed from the package without using cutting tools.

The packages of the present invention preferably have the shape of a rectangular parallelepiped.

A further object of the present invention is the preparation of the package of small cigarette packs as they have been known in commerce from many years, surely since the eighties of the past century, but using the naked collation film of the present invention.

A further object of the present invention is a process for forming a naked collation package using a film according to the invention comprising:

- one group of packed products or packed units each wrapped in the polyolefin film (0),
- a film of the invention for naked collation to form packages of groups of packed products,
- wrapping the film for naked collation on the groups of the single packed products, so that they come into contact with the inner layer (A) of the film and closing the film around the group of packed products by sealing at temperatures in the range 65°C-79°C, preferably 65°C-78°C, more preferably 70°C-76°C.

As said, in the naked collation process of the present invention any risk of sealing between the inner layer (A) of the multilayer film and the film (0) wrapping the single packets of the package is substantially reduced or eliminated.

A further object of the invention are the packages comprising a group of packed products or packed units obtainable by using for naked collation the film of the invention having antiscratch properties.

As said, preferably the package consists of cigarette packets arranged one close to the other.

Preferably the package is prepared by using a film comprising in the core amorphous hydrocarbon resins as defined above, in addition to an homopolymer, the homopolymer preferably being polypropylene.

It has been unexpectedly and surprisingly found by the Applicant that the package prepared with the film of the invention with a core as defined above, shows a higher compactness, thus an improved machinability, i.e. the package can be more easily handled during its production on a high speed manufacturing line, the speed being generally in the range 70-100 packages/minutes.

It has been surprisingly and unexpectedly found by the Applicant that in order to further improve the package compactness and thus its machinability, the naked collation film is obtained by biaxial stretching process by using a stretching ratio 6.3:1 in MD and 7:1 in TD.

It has been surprisingly and unexpectedly found that by using these stretching ratios both the mechanical (elastic modulus) and the heat shrink properties are increased at the same time.

The Applicant has unexpectedly and surprisingly found that it is possible to reduce the scratches on the external layer (B) of the naked collation film of the package without using for compounding the film the formulations indicated in the prior art described above. This is a remarkable advantage from an industrial point of view as the compositions used to confer antiscratch properties to a film layer are made simpler. This result is quite unexpected and surprising as the prior art did not give any indication to arrive at the solution found by the Applicant.

By operating with the films according to the present invention prepared by using the profiles of the stretching ratios in MD and TD as indicated above, a very compact package is obtained, that more easily slides on the belt conveyors and on the relevant metal guides and, as said above, it is substantially free from scratches. This represents a remarkable advantage as the process productivity is improved, being the scraps further reduced or eliminated.

A package is defined as "compact" if it satisfies the following test: when it is held at one edge with the longer sides in an horizontal position, it does not slack (bend) or it does not substantially slack.

When the package is in the form of rectangular parallelepiped, the longer sides are those placed horizontally whereas the package is held by one edge of one of the two shorter sides.

The Applicant has surprisingly and unexpectedly found that it is possible to further improve the scratch resistance of the film if sliding agents are included in the composition of the outer layer (B) that comes into contact with rigid supports or surfaces during transportation along the manufacturing lines. Preferably as sliding agent PMMA having an average particle diameter comprised between 2 and 8 μm, preferably between 3 and 5 μm, is used.

This additive is sold under the commercial name ABVT26SNC® by the company Schulman. It comprises particles having 4 μm diameter. Optionally the above additive is used in combination with other sliding agents of the class of polydiorganosiloxanes. Among the latter the commercial product ABVT30SNC® sold by the Company Schulman and formed of particles having a 4 μm diameter, is used. Both the above sliding agents are preferably used under the form of the corresponding masterbatches, wherein the concentration of the agent is comprised between 10% and 30% by weight, the remaining part of the masterbatch formed of propylene polymers, preferably propylene homopolymers or copolymers as indicated above.

As said, the scraps due to scratches have been substantially eliminated by using for package overwrap the films of the present invention. It is to be noted that for some manufacturers the presence of scratches on the package film represents a critical issue and such as to prevent the put on sale of these products.

Therefore from an industrial point of view the films of the invention give quite remarkable advantages, as the scraps due to scratches are as said very reduced, preferably tending to zero or at all eliminated.

It is to be further noted that for a manufacturing line of 100 packages/min a scrap of 1% means a scrap of 1 package/min and thus for one shift of 8 h there are 1X8X60=4,800 scraps. It is as such evident that these figures cannot be accepted by any manufacturer, in particular by the tobacco manufacturers.

The following examples are given for illustrative but not limitative purposes of the invention.

## EXAMPLES

### CHARACTERIZATION

### Melting point of the polymers

The melting point has been determined by DSC.

### Determination of the tensile strength, elongation at break and elastic modulus of the film

The determinations have been carried out by an Instron dynamometer according to the ASTM D882 standard both in the MD and in TD direction of the film. The elastic modulus has been determined also at room temperature (20-25°C) 48 hours after the preparation of the film.

### Determination of the film sealing mechanical strength

Samples having a width of 10 mm are cut out from the film and sealed as described in the examples by using a sealing machine, for example a "DT Industries SENCORP" model, with an automatic control of temperature, pressure and contact time of the two sealing bars with the sample to be sealed.

The sealing conditions are the following:

upper bar heated, lower bar not heated,
contact time between the bars: 0.2 s
contact pressure of the bars: 5 psi

The sealing temperature is set at the desired value or it can be varied in a desired temperature range, for example as reported in the following Tables 2 and 3.

The mechanical resistance has been measured by an Instron dynamometer.

### Determination of the isotactic polypropylene content in polypropylene (isotacticity index - abbreviated: II)

The determination of the isotactic polypropylene in admixture with the amorphous is carried out by extracting the sample with n-heptane at 50°C for two hours according to FDA 177 1520 Standard. The insoluble fraction is then recovered and weighed. The isotactic index is given by the formula:

$$\frac{\text{insoluble fraction weight in heptane X100}}{\text{sample weight}}$$

Determination of film heat shrinking

The film heat shrinking is determined according to OPMA TC 4 by heating a sample of 20 cm x 1 cm size at 130°C for five minutes in the air.

Heat shrinking in MD or in TD is calculated with the following formula:

$$\frac{(L_1 - L_2) \times 100}{L_1}$$

wherein:

$L_1$ is the film length before the heat treatment
$L_2$ is the film length after heat treatment.

Heat shrinking can also be given by the number obtained in the above equation bearing a negative sign (-).

Extractables in n-hexane

The determination is carried out by extraction at 50°C for 2 hours according to FDA 177 - 1520 Standard.

Analysis of the polymers in the film

The analysis, when requested, is carried out by IR spectroscopy. The polymers of each layer can be isolated by layer peeling, controlling the removal of each layer by electronic microscopy.

Determination of the antiscratch properties of the film

The determination is carried out by using an apparatus for determining the friction coefficient COF according to ASTM D 1894 method.

64x127 mm strips (samples) are cut from the film under test with the longer side (127 mm) being cut in MD direction. The strip is then wound according to its length around the slide of a COF measuring device, the side of the strip to be tested being turned toward the outside. After removing any wrinkle present on the sample, the two shorter sides of the strip are joined by using an adhesive tape.

From the COF measuring device the metal plate having a smooth surface is removed and in its place positioned the metal plate with a rough surface comprised in the set of tools, provided with the COF measuring device. The sample is tested on the surface of the latter metal plate by moving the slide (200 g weight) at a speed of 150 mm/min. The COF value indicated by the measuring device is recorded. The film is removed and the test is repeated under the same conditions by using another sample of the film.

The scratched area of the sample strips is then evaluated. At this purpose the two strips are positioned on a glossy paper sheet (hereinafter: lower glossy paper sheet) so that the non tested surface of the strip faces the glossy paper sheet. The two strips are positioned so that their shorter sides are aligned on a same preferably horizontal line. The two shorter sides of each strip are fixed onto the lower glossy paper sheet by means of an adhesive tape. Then the exposed surfaces of the strips are metallized. As the scratched areas do not get metalized, at the end of the metallization step the samples show clear spots in correspondence of the scratches on a metallized background. The metallized samples are covered with a second glossy paper sheet (hereafter: upper glossy paper sheet), so to overlap the lower glossy paper sheet. When the four sides of the two glossy paper sheets are overlapped, the sheets are blocked with an adhesive tape. On the upper glossy paper sheet the shape of the underlying strip scratched areas is marked by a pencil and then filled with colour by using a permanent marker. On the upper glossy paper sheet a glossy graph paper sheet is positioned so that its orthogonal axes are parallel to the sides of the two sample strips. The glossy graph paper sheet is blocked with an adhesive tape and the scratched areas evaluated by counting the squares inside each scratched area. Also the small squares partially coloured are considered in the calculations.

The antiscratch property is given by the percentage of scratched area with respect to the total area treated in the test and it is given by the following formula

$$(A/B) \times 100$$

wherein:

A = the sum of the coloured small squares (the scratched areas) of the two samples
B = the total sum of the small squares corresponding to the treated areas of the two strips (the total strip area).

At a visual observation the samples appear to be free from scratches when the non metallized surface (the scratched area) is lower than 25% with respect to the surface of the sample.
The Applicant has found that it is possible to carry out the test even omitting the metallization step, without substantially changing the results of the test.

HAZE

The Haze values are determined according to ASTM D 1003.

Determination of the scratch intensity

This determination is based on the Haze test. The samples obtained after metallization, as described in the above test are used.
On these samples a haze determination is carried out.
The scratch intensity is determined by the formula:

$$[(A-B)/B] \times 100$$

wherein:

A is the average value (5 determinations for each sample) obtained from the Haze measurements carried out on the scratched areas of the samples

B is the average value (5 determinations for sample) measured on a sample of the film cut from the roll, not subjected to the above test for antiscratch properties.

EXAMPLE 1

Films for "naked collation"

A film according to the present invention was prepared by a process comprising the following steps:

1) coextrusion of a three layer plate

Three layers were coextruded on a flat die, having the following composition (% by weight):

core layer:

| | |
|---|---|
| 83.5% | propylene homopolymer HP 522H (commercialized by Basell, II (isotacticity index) =98, $T_{melting}$ = 163°C, |
| 3.5% | antistatic masterbatch AT4082PP®, commercialized by Constab |
| 13% | hydrogenated resin masterbarch MDPPH7025® containing 50% by weight of resin, commercialized by Polyone |

outer layer:

| | |
|---|---|
| 93% | elastomeric propylene-butene-1 copolymer (% by weight butene-1 26%) TAFMER XM7070 (Mitsui Chem.), $T_{melting}$= 75°C, |
| 6% | sliding masterbatch ABVT3 NSC®, commercialized by Schulman |
| 1% | antiblock masterbatch based on $SiO_2$ particles having a 2$\mu$m diameter, commercialized by Constab |

inner layer:

93%     TAFMER XM7070, as defined above,
6%     antiblock masterbatch ABVT30N®, commercialized by Schulman,
1%     antiblock masterbatch based on silica particles having a 2μm diameter, commercialized by Constab.

The amounts of the polymeric components in each layer were such that in the final film, having a 25 μ thickness after biaxial stretching, the layers showed the following thickness:

core layer: 23.76 μm
outer layer: 0.42 μm
inner layer: 0.82 μm.

The profile of the set of temperatures of the three extrusion lines was the following:

core layer: 240°C-260°C
outer layer: 160°C-195°C
inner layer: 160°C-195°C

The extrusion lines were equipped by a filter to remove from the melted polymer any gel or foreign body being present.
The three lines of the melt were coextruded on a flat die at T=245°C.

2) Cooling and quenching of the coextruded plate

The coextruded plate obtained in step 1) was cooled and quenched on a thermostatted roll at T=30°C, one third of the roll being dipped in a water bath at T=39°C.

3) Trimming of the plate edges and heating by an IR battery

The plate edges were trimmed up to about 5 cm and then the plate was passed under a battery of IR panels having temperatures in the range: 160°C-270°C.

4) Simultaneous biaxial stretching on a stretching machine

A LISIM® equipment was used for the simultaneous biaxial stretching.
The multilayer film was stretched both in MD longitudinal direction and in TD transversal direction by setting the machine with the following stretching ratios:

MD= 6.30 (ratio between the outlet and inlet speed);
TD= 6.99 (ratio between the distance among the rails at the outlet of the oven/distance among the rails at the inlet of the oven);
the film outlet speed from the oven was 243 m/min.

At the outlet from the oven the profile of the stretching ratios both in MD and in TD showed a maximum peak followed by a descending slope. The projection of this descending slope on the ordinate axis was found lower than <15% with respect to the peak value determined on the same axis.
Temperatures of the sections of the oven were in the ranges reported hereinunder:

Preheating section:              158°C-170°C
Simultaneous stretching section:  157°C-170°C
Stabilization section:           157°C-146°C

5) Wrapping of the film in roll

At the oven outlet the film was passed to the pull-roll section for the following operations:

edge trimming,
X ray scanning for film thickness control.

At the outlet of the pull-roll section the film was wound in a roll having a width of 6,150 mm.

Film properties

The mechanical and sealing properties of the film have been evaluated.

Mechanical properties

The obtained results are reported in Table 1.

Table 1

| Properties | | Example 1 |
|---|---|---|
| Tensile strength at break (MPa) | MD | 1730 |
| | TD | 2090 |
| Elongation at break (%) | MD | 116 |
| | TD | 80 |
| Elastic modulus (MPa) at t=0 | MD | n.d. |
| | TD | n.d. |
| Elastic modulus (ageing for 48h at r.t. (MPa)) | MD | 2745 |
| | TD | 3187 |
| (n.d. in Table 1 means not determined) | | |

Heat shrink

The film of the invention shows a biaxial heat shrink in MD of 10.40% and in TD 8.96%.

Sealing test

Both the seal strength of the film sealed with itself and the seal strength of the film sealed with a commercial three layer film STILAN® LTS20 commercialized by BIMO/IRPLAST having a 25 $\mu$m thickness, were determined. The latter film was used for wrapping the single cigarette packs (film (O)). The film, as said, consisted of three layers with a core similar to that of the film of the naked collation film of this example but the inner and outer layer were made of $C_2/C_3/C_4$ copolymers (with $C_2+C_4 \leq 9\%$ by weight) having $T_{melting}= 132°C$.

Seal resistance obtained by sealing the outer layer (B) with the inner layer (A) (B/A) of the film of the multi-package (naked collation)

Table 2 reports the seal resistance values at the therein indicated temperatures.

TABLE 2

| T (°C) | 65 | 70 | 75 | 80 |
|---|---|---|---|---|
| Resistance to sealing (g/25 mm) | 0 | 0 | 67 | 94 |

The data of the Table show that the outer layer (B) and the inner layer (A) of the film of the invention sealed at the temperature of 75°C. The seal resistance value obtained at the temperature of 75°C ensured the sealing of the package comprising the single cigarette packets.

Seal resistance of the inner layer (A) of the naked collation film sealed with film (0) wrapping the single cigarette packets.

Table 3 reports the seal resistance values obtained in this test:

Table 3

| T (°C) | 65 | 70 | 75 | 80 | 85 | 90 | 95 | 100 | 105 | 110 | 115 |
|---|---|---|---|---|---|---|---|---|---|---|---|
| Seal resistance (g/25 mm) | 0 | 0 | 0 | 0 | 0 | 0 | 0 | 0 | 0 | 0 | 127 |

The data of the Table show that at the sealing temperature of 75°C the film of the single cigarette packets was not sealed with the overwrap film of the invention.

Antiscratch properties

The test above described was carried out on the film.
In the test the scratched area resulted lower than 25% with respect to the treated area.
Therefore the film passed the test.

Application with FOCKE® machine of the Company Focke & Company

The film was tested in an industrial application of "naked collation overwrap" for producing packages each of 10 cigarette packs. The test conditions were the following: Manufacturing lines provided with metal guides; line speed: 700 packs/min, (70 packages/min).
The sealing between inner layer (A)/outer layer (B), outer layer(B)/inner layer (A), inner layer (A)/inner layer (A), outer layer (B)/outer layer (B) of the film of the invention was obtained at 75°C and there was no sealing between the inner layer (A) of the film of the invention and the film (0) of the single cigarette packets.
The packages during the manufacturing process were handled on metal guides.
During the process it was not necessary to stop the manufacturing line for cleaning the machines as the film did not release powders.
The higher mechanical properties in MD direction allowed a better precision and constancy of the cut length.
This is an advantage with respect to the films lacquered with acrylic solution commonly used for the naked collation.

Opening of the package

A package prepared as described above was opened by twisting it slightly with hands. No adhesion of the film of the invention to the cigarette packets was noticed.

Antiscratch properties

A control of the scratches on the overwrap film was carried out after handling the packages on the guides having rigid (metallic) surfaces.
At a visual inspection of the operator and of the supervisors of the tobacco manufacture the packages delivered from the manufacturing lines did not show scratches on the overwrap film.

Application with machine GD® of the company G.D. S.p.A.

The example of application with the FOKE® machine line was repeated but using a machine GD® with a line speed of 800 packs/min (80 packages/min).
The manufacturing lines were equipped with metal guides. During the process there was no downtime for cleaning the machines, as the film did not release powders.
The higher mechanical properties in MD direction allowed a better precision and constancy of the cut length.
The sealing between the inner layer/outer layer (A/B), outer layer/inner layer (B/A), outer layer/outer layer (B/B), inner layer/inner layer (A/A) of the film of the invention was obtained at 75°C and no sealing was noticed between the inner layer (A) of the film of the invention and the film (0) wrapping the single cigarette packets.

Opening of the package

The package was opened by twisting it slightly with hands. No adhesion of the film of the invention to the cigarette packets was noticed.

Antiscratch properties

A control of scratches on the overwrap film was carried out after handling the packages on guides having rigid (metallic) surfaces.

At a visual inspection of the operator and of the supervisors of the tobacco manufacture the packages delivered from the manufacturing lines did not show scratches on the overwrap films.

EXAMPLE 2 (Comparative)

Example 1 was repeated but in the multilayer film the thickness of the outer layer (B) was increased to 1 $\mu$m. The film was not heat shrinkable and the elastic modulus was lower than that of example 1. Therefore it was tensilized at a lower extent than that of the example of the invention.

The comparative film for naked collation was prepared by a process comprising the following steps:

1) coextrusion of a three layer plate

Three layers having composition (% by weight) were coextruded in flat die:

Core layer:

98%    propylene homopolymer HP 522H commercialized by Basell as defined above, Tmelting= 163°C
2%     antistatic masterbatch ASPA2446 by Schulman,

outer layer:

95%    copolymer TAFMER XM7070 (Mitsui) as defined above
5%     antiblock masterbatch ABVT34® SC by Schulman,

inner layer:

95%    TAFMER® XM7070 as defined above
5%     antiblock masterbatch ABVT34® SC, as defined above.

The amounts of the polymer components in each layer were such that in the film, after biaxial stretching, the layers showed the following thickness:

core layer 23 $\mu$m
outer layer 1 $\mu$m
inner layer 1 $\mu$m.

The profile of the set temperatures of the three extrusion lines was the following:

core layer 230°C-265°C
outer layer 160°C-185°C
inner layer 160°C-185°C

The three extrusion lines were equipped by a filter to remove from the melted polymer any gel or foreign body being present.

The three lines of the melt were coextruded in a flat die at T=245°C.

## 2) Cooling and quenching of the coextruded plate

The coextruded plate obtained in step 1) was cooled and quenched on a thermostatted roll at T=28°C, one third of the roll being dipped in a water bath at T=30°C.

## 3) Trimming of the plate edges and heating in an IR battery

The plate edges were trimmed up to about 5 cm and then the plate was passed under a battery of IR panels having temperatures in the range: 190°C-270°C.

## 4) Simultaneous biaxial stretching on a stretching machine

A LISIM® equipment was used for the simultaneous biaxial stretching.
The multilayer film was stretched both in MD longitudinal direction and in TD transversal direction by setting the machine with the following stretching ratios:

MD= 6.20 (ratio between the outlet and inlet speed);
TD= 7.040 (ratio between the distance among the stretching rails at the outlet of the oven/inlet of the oven; the film outlet speed from the oven was 260 m/min.

The temperatures of the sections of the oven were in the ranges reported hereinunder:

| | |
|---|---|
| Preheating section: | 154°C-174°C |
| Simultaneous stretching section: | 158°C-162°C |
| Stabilization section: | 162°C-168°C |

## 5) Wrapping of the film in roll

At the oven outlet the film was passed to the pull-roll section for the following operations:

edge trimming,

X ray scanning for film thickness control.

At the outlet of the pull-roll section the film was wound in a roll having a width of 6,150 mm.

## Film properties

The mechanical and sealing properties of the film have been evaluated.

## Mechanical properties

The obtained results are reported in Table 4.

Table 4

| Properties | | Example 2 comp |
|---|---|---|
| Tensile stress at break (MPa) | MD | 1760 |
| | TD | 2304 |
| Elongation at break (%) | MD | 105 |
| | TD | 88 |
| Elastic modulus (MPa) at t=0 h | MD | 1816 |
| | TD | 2226 |

(continued)

| Properties | | Example 2 comp |
|---|---|---|
| Elastic modulus after ageingt for 48h at r.t. (MPa) | MD | 2432 |
| | TD | 2772 |

Sealing test

Both the seal strength of the film of the comparative Example 2 sealed with itself and with a commercial three layer film STILAN® LTS20 commercialized by BIMO/IRPLAST, were determined. The latter film was used for wrapping the single cigarette packets (film (O)). The characterization of the film has been given above.

Seal resistance of the film of Example 2 comparative obtained by sealing the outer layer (B) with the inner layer (A) of the multi-package.

Table 5 reports the seal resistance values obtained at the indicated temperatures.

TABLE 5

| T (°C) | 65 | 70 | 75 | 80 |
|---|---|---|---|---|
| Seal resistance (g/25 mm) | 0 | 0 | 67 | 94 |

The data of the Table show that the outer layer (B) and the inner layer (A) of the film of the comparative Example sealed at the temperature of 75°C. The seal resistance value obtained at the temperature of 75°C ensured sealing of the package of the group of the single packets.

Seal resistance of the inner layer (A) of the multi-package film sealed with the film (O) used to manufacture the single packets.

Table 6 reports the values of the seal resistance obtained in this test.

Table 6

| T (°C) | 65 | 70 | 75 | 80 | 85 | 90 | 95 | 100 | 105 | 110 | 115 |
|---|---|---|---|---|---|---|---|---|---|---|---|
| Seal resistance (g/25 mm) | 0 | 0 | 0 | 0 | 0 | 0 | 0 | 0 | 0 | 0 | 127 |

The data reported in the Table show that at the sealing temperature of 75°C the film of the single cigarette packets did not seal with the overwrap film of Example 2 comparative.

Antiscratch properties

The test above described was carried out on the film of the comparative Example.
In the test the scratched area resulted higher than 55% with respect to the treated area.

Application with FOCKE® machine

The same application described for the film of Example 1 was repeated but using the film of Example 2 comparative.
The sealing between the inner layer (A) and the outer layer (B) of the film of example 2 comparative was obtained at 75°C and there was no sealing between the inner layer (A) and the film (O) of the single cigarette packets.
During the process it was not necessary to stop the manufacturing machines for cleaning the machines as the film did not release powders.

Opening of the package

A package obtained as indicated above with the FOKE® machine was opened by twisting it slightly with hands.

No adhesion of the film to the cigarette packets was noticed.

Antiscratch properties

At a visual inspection about 70% of the packages delivered by the manufacturing lines after handling on metal guides showed the presence of scratches on the overwrap film.

Application with machine GD®

The same application described for the film of Example 1 was repeated but using the film of Example 2 comparative. During the process no downtime for cleaning the machines was necessary, as the film did not release powders.
The sealing between the inner layer/outer layer (A/B), outer layer/inner layer (B/A), outer layer/outer layer (B/B), inner layer/inner layer (A/A) of the film of Example 2 comparative was obtained at 75°C and no sealing was noticed between the inner layer (A) of the multilayer film and the film of the single cigarette packs.

Opening of the package

The package was opened by twisting it slightly with hands. No adhesion of the film of the invention to the cigarette packs was noticed.

Antiscratch properties

At a visual inspection about 70% of the packages delivered by the manufacturing lines after handling on metal guides showed the presence of scratches on the overwrap film.

EXAMPLE 3

Example 1 was repeated but in the core of the naked collation film the amount of propylene homopolymer HP 522H® was reduced to 70.5% by weight and 13% by weight of reclaimed (regranulated) polypropylene was added.
The same data of Example 1 were substantially obtained but the package showed a higher compactness according to the test above described, i.e. it did not slack. The heat shrink in MD was 11.50% and in TD 9.40%.

EXAMPLE 4 comparative

Example 2 comparative was repeated but the core of the film had the same composition as in example 3.
The results are similar to those obtained in Example 2 comparative.

**Claims**

1.   Multilayer films for naked collation of packed products wherein the single packed units are wrapped in a film formed of one or more olefin (co)polymers having melting temperature higher than 120°C to form packs of 6 or more packed pieces by placing the inner layer of the multilayer films in contact with the film wrapping the single packed units (film O), wherein the multilayer films comprise at least a core layer, an inner layer and an outer layer consisting of one or more olefin (co)polymers wherein:

- outer layer: (co)polymers having a melting temperature in the range 65°C-85°C;
- inner layer: (co)polymers having a melting temperature in the range 65°C-105°C;
- core layer: propylene and/or butene (co)polymers having melting temperature higher than 140°C;

**characterized in that** the outer layer of the multilayer film has a thickness comprised between 0.35 and <0.5 $\mu$m.

2.   Multilayer films according to claim 1 wherein the thickness of the outer layer is comprised between 0.4 and 0.45 $\mu$m.

3.   Multilayer films according to claims 1-2 wherein the film is a biaxially or uniaxially oriented heat shrinkable film.

4.   Multilayer films according to claims 1-3 wherein the film is biaxially oriented heat shrinkable.

5. Multilayer films according to claims 1-4 wherein the packed units are cigarette packets arranged one close to the other.

6. Multilayer films according to claims 1-5 wherein the (co)polymers forming the outer layer and the inner layer are equal to or different from each other in the two layers.

7. Multilayer films according to claims 1-6 wherein the (co)polymers of the inner layer and outer layer are selected from ethylene copolymers comprising one or more linear or branched alpha-olefin comonomers having from 3 to 12 carbon atoms and propylene copolymers comprising one or more linear or branched alpha-olefin comonomers from 4 to 12 carbon atoms.

8. Multilayer films according to claims 1-7 wherein the core in addition to the (co)polymers contains amorphous hydrocarbon resins.

9. Multilayer films according to claim 8 wherein the core (co)polymer is polypropylene.

10. Multilayer films according to claims 1-9 wherein the film has thickness comprised between 10 and 60 $\mu$m, the core layer 8-38 $\mu$m, the thickness of the inner layer being the difference between that of the film and that of the other layers.

11. Multilayer films according to claims 1-10 obtainable by extrusion and subsequent simultaneous biaxial stretching in the MD machine direction and in the TD transversal direction.

12. Multilayer films according to claim 11 wherein a flat die biaxial stretching is used.

13. Multilayer films according to claims 1-12 wherein the film stretching is carried out in an oven at temperatures in the range 80°C-210°C and the longitudinal stretching ratios are comprised between 3:1 and 10:1 and the transversal stretching ones between 3:1 and 10:1.

14. Multilayer film according to claims 1-13 comprising more than 3 layers, with the proviso that the inner layer, the core and the outer layer are as defined above, the added layers being equal to or different from the other layers of the multilayer films of claims 1-13.

15. Multilayer films according to claims 1-14 wherein the sealing temperature among the outer/outer, inner/inner, outer/inner and inner/outer layers is comprised between 65°C and 79°C.

16. Use of the films according to claims 1-15 for the naked collation of packed products.

17. Use according to claim 16 to form packs of 6 or more packed pieces wherein the single packed units are wrapped in a film formed of one or more olefin (co)polymers having melting temperature higher than 120°C by placing the inner layer of the multilayer films according to claims 1-15 in contact with the film wrapping the single packed units (film O)..

18. A process for forming a (naked collation) package comprising:

- one group of packed units each wrapped in a polyolefin film (O),
- a film for naked collation according to claims 1-15 to form packages of groups of packed products,
- wrapping the film for naked collation on the groups of the single packed units so that they come into contact with the inner layer of the film for naked collation and closing the film around the group of packed units by sealing at temperatures in the range 65°C-79°C.

19. Packages comprising a group of packed units obtainable by using for naked collation the film having the antiscratch properties of claims 1-15.

**Patentansprüche**

1. Mehrschichtige Folien für die nackte Verpackung von verpackten Produkten, wobei die einzelnen verpackten Einheiten mit einer Folie umhüllt werden, die aus einem oder mehreren Olefin (co) polymeren mit einer Schmelztemperatur von mehr als 120 °C gebildet wird, um Packstücken von 6 oder mehreren verpackten Stücken zu bilden, indem die innere Schicht der mehrschichtigen Folien in Kontakt mit der Folie gebracht wird, die die einzelnen verpackten Einheiten (Folie O) umhüllt, wobei die mehrschichtigen Folien mindestens eine Kernschicht, eine innere Schicht und eine äußere Schicht umfassen, die aus einem oder mehreren Olefin(co)polymeren besteht, wobei:

- äußere Schicht: (Co)Polymere eine Schmelztemperatur im Bereich von 65 °C-85 °C aufweist;
- innere Schicht: (Co)Polymere eine Schmelztemperatur im Bereich von 65 °C-105 °C aufweist;
- Kernschicht: Propylen- und/oder Buten(co)polymere eine Schmelztemperatur höher als 140 °C aufweist;

**dadurch gekennzeichnet, dass** die äußere Schicht der mehrschichtigen Folie eine Dicke zwischen 0,35 und <0,5 $\mu$m aufweist.

2. Mehrschichtige Folien nach Anspruch 1, wobei die Dicke der äußeren Schicht zwischen 0,4 und 0,45 $\mu$m liegt.

3. Mehrschichtige Folie nach Anspruch 1 bis 2, wobei die Folie eine biaxial oder uniaxial orientierte wärmeschrumpfbare Folie ist.

4. Mehrschichtige Folien nach Anspruch 1 bis 3, wobei die Folie biaxial orientiert wärmeschrumpfbar ist.

5. Mehrschichtige Folien nach Anspruch 1 bis 4, wobei die verpackten Einheiten Zigarettenschachteln sind, die dicht nebeneinander angeordnet sind.

6. Mehrschichtige Folien nach Anspruch 1 bis 5, wobei die die äußere und die innere Schicht bildenden (Co)Polymere in den beiden Schichten gleich oder voneinander verschieden sind.

7. Mehrschichtige Folien nach Anspruch 1 bis 6, wobei die (Co)polymere der inneren Schicht und der äußeren Schicht aus Ethylencopolymeren ausgewählt sind, die ein oder mehrere lineare oder verzweigte alpha-Olefincomonomere mit 3 bis 12 Kohlenstoffatomen und Propylencopolymere ausgewählt werden, die ein oder mehrere lineare oder verzweigte alpha-Olefincomonomere mit 4 bis 12 Kohlenstoffatomen umfassen.

8. Mehrschichtige Folien nach Anspruch 1 bis 7, wobei der Kern zusätzlich zu den (Co)polymeren amorphe Kohlenwasserstoffharze enthält.

9. Mehrschichtige Folien nach Anspruch 8, wobei das Kern(co)polymer Polypropylen ist.

10. Mehrschichtige Folien nach Anspruch 1 bis 9, wobei die Folie eine Dicke zwischen 10 und 60 $\mu$m aufweist, die Kernschicht 8 bis 38 $\mu$m, wobei die Dicke der inneren Schicht die Differenz zwischen der der Folie und der der anderen Schichten ist.

11. Mehrschichtige Folien nach Anspruch 1 bis 10, erhältlich durch Extrusion und anschließendes gleichzeitiges biaxiales Recken in MD-Maschinenrichtung und in TD-Querrichtung.

12. Mehrschichtige Folien nach Anspruch 11, wobei eine biaxiale reckende Flachmatrize verwendet wird.

13. Mehrschichtige Folien nach Anspruch 1 bis 12, wobei das Recken der Folie in einem Ofen bei Temperaturen im Bereich von 80 °C bis 210 °C durchgeführt wird und die Längsreckverhältnisse zwischen 3:1 und 10:1 und die Querreckverhältnisse zwischen 3:1 und 10:1 liegen.

14. Mehrschichtige Folien nach Anspruch 1 bis 13, die mehr als 3 Schichten umfassen, mit der Maßgabe, dass die innere Schicht, der Kern und die äußere Schicht wie oben definiert sind, die hinzugefügten Schichten gleich oder verschieden von den anderen Schichten der mehrschichtigen Folien nach Anspruch 1 bis 13 sind.

15. Mehrschichtige Folien nach Anspruch 1 bis 14, wobei die Siegeltemperatur zwischen den äußeren/äußeren, inneren/inneren, äußeren/inneren und inneren/äußeren Schichten zwischen 65 °C und 79 °C liegt.

16. Verwendung von Folien nach Anspruch 1 bis 15 für die nackte Verpackung von verpackten Produkten.

17. Verwendung nach Anspruch 16 zur Bildung von Packstücken mit 6 oder mehr verpackten Stücken, wobei die einzeln verpackten Einheiten mit einer Folie umhüllt sind, die aus einem oder mehreren Olefin (co) polymeren mit einer Schmelztemperatur höher als 120 °C gebildet wird, indem die innere Schicht der mehrschichtigen Folien nach Anspruch 1 bis 15 in Kontakt mit der Folie gebracht wird, die die einzeln verpackten Einheiten (Folie 0) umhüllt.

18. Verfahren zur Herstellung einer (nackten) Verpackung, umfassend:

- eine Gruppe von verpackten Einheiten, die jeweils mit einer Polyolefinfolie (0) umhüllt sind,
- eine Folie für die nackte Verpackung nach Anspruch 1 bis 15 zur Bildung von Packungen von Gruppen verpackter Produkte,
- Umhüllen der Gruppen der einzeln verpackten Einheiten mit der Folie für die nackte Verpackung, so dass sie mit der inneren Schicht der Folie für die nackte Verpackung in Kontakt kommen, und die Folie um die Gruppe der verpackten Einheiten durch Versiegelung bei Temperaturen im Bereich von 65 °C-79 °C verschließen.

19. Packungen, die eine Gruppe von verpackten Einheiten umfassen, die für das nackte Verpacken unter Verwendung von der Folie mit den Kratzfestigkeitseigenschaften der Ansprüche 1 bis 15 erhältlich sind.

## Revendications

1. Films multicouches pour regroupement à nu de produits emballés dans lesquels les unités individuelles emballées sont enveloppées dans un film formé d'un ou plusieurs (co)polymères d'oléfine ayant une température de fusion supérieure à 120 °C pour former des paquets de 6 ou plusieurs pièces emballées en plaçant la couche interne des films multicouches en contact avec le film enveloppant les unités individuelles emballées (film O), dans lesquels les films multicouches comprennent au moins une couche principale, une couche interne et une couche externe consistant en un ou plusieurs (co)polymères d'oléfine dans lesquels :

- couche externe : les (co)polymères ayant une température de fusion comprise entre 65 et 85 °C ;
- couche interne : les (co)polymères ayant une température de fusion comprise entre 65 et 105 °C ;
- couche principale : les (co)polymères de propylène et/ou de butène ayant une température de fusion supérieure à 140 °C ;

**caractérisés en ce que** la couche externe du film multicouche a une épaisseur comprise entre 0,35 et <0,5 $\mu$m.

2. Films multicouches selon la revendication 1, **caractérisés en ce que** l'épaisseur de la couche externe est comprise entre 0,4 et 0,45 $\mu$m.

3. Films multicouches selon les revendications 1-2, dans lesquels le film est un film thermorétractable orienté biaxialement ou uniaxialement.

4. Films multicouches selon les revendications 1-3, dans lesquels le film est thermorétractable orienté biaxialement.

5. Films multicouches selon les revendications 1-4, dans lesquels les unités emballées sont des paquets de cigarettes disposés les uns à côté des autres.

6. Films multicouches selon les revendications 1-5, dans lesquels les (co)polymères formant la couche externe et la couche interne sont identiques ou différents les uns des autres dans les deux couches.

7. Films multicouches selon les revendications 1-6, dans lesquels les (co)polymères de la couche interne et de la couche externe sont sélectionnés à partir de copolymères d'éthylène comprenant un ou plusieurs comonomères d'alpha-oléfine linéaires ou ramifiés comportant de 3 à 12 atomes de carbone et des copolymères de propylène comprenant un ou plusieurs comonomères d'alpha-oléfine linéaires ou ramifiés de 4 à 12 atomes de carbone.

8. Films multicouches selon les revendications 1-7, dans lesquels en plus des (co)polymères, l'âme contient des résines hydrocarbures amorphes.

9. Films multicouches selon la revendication 8, dans lesquels le (co)polymère principal est du polypropylène.

10. Films multicouches selon les revendications 1-9, dans lesquels le film a une épaisseur comprise entre 10 et 60 $\mu$m, la couche principale 8-38 $\mu$m, l'épaisseur de la couche interne représentant la différence entre celle du film et celle des autres couches.

**11.** Films multicouches selon les revendications 1-10, pouvant s'obtenir par extrusion et par étirage biaxial simultané ultérieur dans le sens machine MD et dans le sens transversal TD.

**12.** Films multicouches selon la revendication 11, dans lesquels un étirage biaxial à filière plate est utilisé.

**13.** Films multicouches selon les revendications 1-12, dans lesquels l'étirage du film est réalisé dans un four à une température comprise entre 80 et 210 °C et les rapports d'étirages longitudinaux sont compris entre environ 3:1 et environ 10:1 et ceux d'étirages transversaux entre environ 3:1 et environ 10:1.

**14.** Film multicouche selon les revendications 1-13, comprenant plus de 3 couches, à la condition que la couche interne, les couches centrale et externe soient définies comme ci-dessus, les couches ajoutées étant identiques ou différentes des autres couches des films multicouches selon les revendications 1-13.

**15.** Films multicouches selon les revendications 1-14, dans lesquels la température de soudage parmi les couches externe/externe, interne/interne, externe/interne et interne/externe est comprise entre 65 et 79 °C.

**16.** Utilisation de films selon les revendications 1-15 pour le regroupement à nu de produits emballés.

**17.** Utilisation selon la revendication 16, pour former des paquets de 6 ou plusieurs pièces emballées dans laquelle les unités individuelles emballées sont enveloppées dans un film formé d'un ou plusieurs (co)polymères d'oléfine ayant une température de fusion supérieure à 120 °C en plaçant la couche interne des films multicouches, selon les revendications 1-15, en contact avec le film enveloppant les unités individuelles emballées (film O).

**18.** Procédé destiné à former un (regroupement à nu) emballage comprenant :

- un groupe d'unités emballées chacune enveloppée dans un film polyoléfinique (0),
- un film pour regroupement à nu selon les revendications 1-15, pour former des paquetages ou des groupes de produits emballés,
- envelopper le film, pour le regroupement à nu, sur les groupes d'unités individuelles emballées de manière à ce qu'elles se mettent en contact avec la couche interne du film pour le regroupement à nu et refermer le film autour du groupe d'unités emballées par soudage à des températures comprises entre 65°C et 79 °C.

**19.** Paquetages comprenant un groupe d'unités emballées pouvant être obtenu en utilisant pour le regroupement à nu le film ayant des propriétés antirayures selon les revendications 1-15.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4502263 A
- US 4734318 A
- US 4883698 A
- US 5302427 A
- EP 2520428 A
- US 4853602 A